# DEMANDE DE BREVET EUROPEEN

(11) **EP 4 538 151 A1**
(43) Date de publication de la demande: **16.04.2025**
(21) Numéro de dépôt: 24204483.2
(22) Date de dépôt: 03.10.2024
(51) Int. Cl.: B62D 25/08, B62D 25/12, E05B 79/20, E05B 83/24

(54) **AGENCEMENT POUR VÉHICULE AUTOMOBILE COMPRENANT UN ENSEMBLE DE VERROUILLAGE D'UN CAPOT ET UN ÉLÉMENT DE CADRE PORTEUR**

(30) Priorité: 09.10.2023 FR 2310757
(71) Demandeur: Renault s.a.s, 92100 Boulogne Billancourt (FR)
(72) Inventeur: GHIRARDINI, Armand, 78280 Guyancourt (FR); KOVACS, Ludovic, 78280 Guyancourt (FR)

(57) **Abrégé**

Agencement (10) pour véhicule automobile comprenant un ensemble de verrouillage (4) comportant une serrure (41) apte à verrouiller un capot, un dispositif d'actionnement et un câble (43), l'agencement (10) comprenant, en outre, un élément de cadre porteur (3) allongé s'étendant le long d'une première direction et étant disposé entre un premier espace (5a), comprenant un compartiment moteur du véhicule, et un deuxième espace (5b) du véhicule, l'élément de cadre porteur (3) comprenant un orifice (7) traversant depuis le premier espace (5a) vers le deuxième espace (5b) et dans lequel le câble (43) est disposé transversalement à la première direction.

## Description

L'invention concerne un agencement pour véhicule automobile comprenant un ensemble de verrouillage d'un capot et un élément de cadre porteur. L'invention concerne également un véhicule équipé d'un tel agencement. L'invention concerne enfin un procédé de montage de l'agencement.

Dans le milieu automobile, un module de refroidissement est classiquement équipé en face avant du véhicule. Particulièrement, le module de refroidissement est monté sur une pluralité d'éléments de cadre porteur, notamment un élément inférieur et un élément supérieur, correspondant à des éléments de structure du véhicule situés en avant du groupe motopropulseur et ayant pour fonction de supporter différents organes du véhicule.

Il est notamment connu de réaliser la fixation de divers câbles et raccordements sur les éléments de cadre porteur. En particulier, l'ensemble de verrouillage du capot du véhicule est en partie monté sur l'élément de cadre porteur supérieur. Au moins une serrure est montée sur une partie centrale ou une partie latérale de l'élément de cadre porteur tandis qu'un dispositif d'actionnement de la serrure est monté de sorte à être accessible depuis l'habitacle, par exemple sur la structure de caisse. Le dispositif d'actionnement est relié à la serrure par l'intermédiaire d'un câble classiquement fixé à l'élément de cadre porteur supérieur. De manière connue, le câble est fixé au-dessus de l'éléments de cadre porteur, entre le capot et ledit élément, ou en dessous de l'élément de cadre porteur, entre le module de refroidissement et ledit élément.

De tels exemples de fixation du câble de l'ensemble de verrouillage du capot génèrent néanmoins un encombrement vertical supplémentaire incompatible avec un contexte d'abaissement du capot visant à assurer une meilleure visibilité au conducteur par la réduction de la côte verticale mesurée en face avant entre le sol et le capot.

Par ailleurs, des contraintes additionnelles peuvent limiter les possibilités de fixation du câble. C'est par exemple le cas de l'encombrement transversal de la face avant du véhicule du fait de formes spécifiques des projecteurs avant ou encore de la nécessité de limiter les courbures du câble à de larges rayons de courbure afin d'assurer son bon fonctionnement.

La présente invention s'inscrit dans ce contexte et vise à fournir une alternative à la fixation du câble de l'ensemble de verrouillage du capot qui soit peu coûteuse, peu encombrante et permettant un montage simple dans le véhicule.

L'invention se rapporte à un agencement pour véhicule automobile comprenant un ensemble de verrouillage comportant une serrure apte à verrouiller un capot du véhicule, un dispositif d'actionnement configuré pour actionner à distance la serrure et un câble reliant le dispositif d'actionnement à la serrure. L'agencement comprend, en outre, un élément de cadre porteur apte à maintenir un échangeur de chaleur du véhicule et maintenant la serrure, l'élément de cadre porteur s'étendant au moins en partie le long d'une première direction et étant disposé entre un premier espace, configuré pour comprendre un groupe motopropulseur du véhicule, et un deuxième espace du véhicule. L'élément de cadre porteur comprend une pluralité de parois et un orifice, disposé dans l'une des parois, traversant depuis le premier espace vers le deuxième espace et dans lequel le câble est disposé transversalement à la première direction.

Notamment, la pluralité de parois de l'élément de cadre porteur comprend une structure en « U » ou sensiblement en « U » comprenant une première paroi et une deuxième paroi, opposées, et une paroi intermédiaire les reliant entre elles, l'orifice étant disposé dans la paroi intermédiaire.

### Notamment :

- au moins une portion du câble disposée dans le deuxième espace s'étend en appui d'au moins un bord de l'orifice ; et/ou
- au niveau du passage du câble à travers l'orifice, le câble comprend une ou plusieurs courbure(s) chacune d'angle supérieur ou égal à 80°, voire à 100° ou encore supérieur à 130°, voire à 145°.

Selon un exemple de réalisation, l'orifice est délimité par au moins un bord arrondi ou congé.

Optionnellement, l'élément de cadre porteur comprend un organe d'appui, s'étendant en saillie d'une face de l'élément de cadre porteur, notamment d'une face tournée vers le deuxième espace, l'organe d'appui étant apte à former butée du câble.

Notamment, l'élément de cadre porteur comprend un organe de renfort.

Selon un exemple de réalisation, l'élément de cadre porteur comprend un segment rectiligne ou sensiblement rectiligne, portant la serrure, et au moins un segment incliné présentant une inclinaison β, comprise entre 15 et 40°, voire entre 20° et 30°, relativement au segment rectiligne et à la première direction, l'orifice étant compris dans le segment incliné.

Notamment, l'agencement comprend, en outre, au moins un organe de fixation du câble apte à maintenir le câble solidaire de l'élément de cadre porteur.

L'invention concerne également un véhicule comprenant un groupe motopropulseur et un module de refroidissement, le véhicule comprenant, en outre, un agencement selon l'invention, l'élément de cadre porteur portant le module de refroidissement.

L'invention s'étend enfin à un procédé de montage d'un agencement selon l'invention dans un véhicule, comprenant :
- le positionnement du dispositif d'actionnement dans le véhicule ;
- la fixation d'une première extrémité du câble au dispositif d'actionnement; puis
- le tirage du câble en passant successivement dans le premier espace, dans l'orifice de l'élément de cadre porteur puis dans le deuxième espace ;
- la fixation d'une deuxième extrémité du câble, opposée à la première extrémité, à la serrure.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique vue de face d'un exemple de réalisation d'un véhicule comprenant un agencement.
La figure 2 est une représentation schématique vue de face de l'agencement comprenant un ensemble de verrouillage d'un capot et un élément de cadre porteur.
La figure 3 est une représentation schématique vue de devant de l'agencement.
La figure 4 est une représentation schématique vue de dessus de l'agencement.
La figure 5 est une représentation schématique en coupe vue de dessus de l'agencement.
La figure 6 est une représentation schématique vue de devant du positionnement d'un câble de l'ensemble de verrouillage passant dans un orifice de l'élément de cadre porteur.
La figure 7 est une représentation schématique vue de derrière du positionnement d'un câble de l'ensemble de verrouillage passant dans un orifice de l'élément de cadre porteur.
La figure 8 est une représentation schématique en coupe vue de côté du passage du câble passant dans un orifice de l'élément de cadre porteur.
La figure 9 est une représentation schématique vue de derrière de la fixation du câble sur l'élément de cadre porteur.

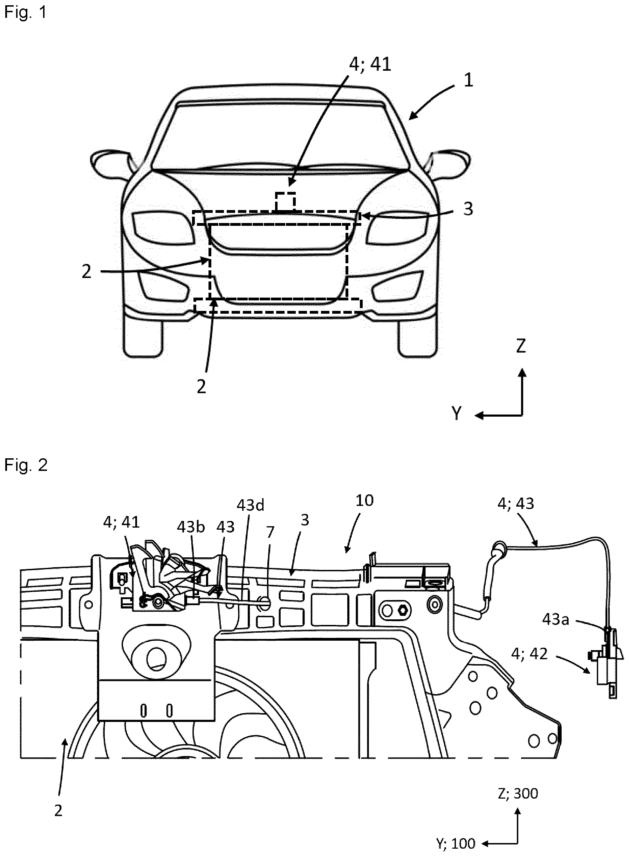

La figure 1 illustre schématiquement un exemple de réalisation d'un véhicule 1, notamment un véhicule 1 automobile. Le véhicule 1 considéré peut être de tout type. Par exemple, le véhicule 1 peut être un véhicule 1 particulier ou un véhicule 1 utilitaire. Egalement, le véhicule 1 peut être à motorisation thermique, électrique ou hybride.

Selon les conventions relatives au domaine automobile, dans l'ensemble de la description ci-après, la direction dans laquelle le véhicule 1 automobile se déplace en ligne droite est définie comme étant la direction longitudinale, orientée de l'avant vers l'arrière du véhicule 1. La direction perpendiculaire à la direction longitudinale et située dans un plan parallèle à un sol sur lequel repose le véhicule 1 est nommée direction transversale Y. La direction perpendiculaire aux directions X et Y est nommée direction verticale Z. Ainsi, on définit un repère direct XYZ. Les termes « haut » et « bas » ou « supérieur » et « inférieur » s'entendent dans leur sens général, les termes « bas » et « inférieur » désignant une proximité avec le sol plus importante. Il en va de même pour les termes « avant » et « arrière ». Egalement, les termes « premier », « deuxième » ont vocation à distinguer des éléments similaires et non à définir une hiérarchie au sein desdits éléments.

Le véhicule 1 comprend au moins un moteur d'un groupe motopropulseur équipant disposé à l'avant du véhicule 1. Le véhicule 1 comprend également un module de refroidissement 2, aussi qualifié de valise de refroidissement, et comprenant un ou plusieurs échangeur(s) de chaleur et/ou radiateur(s). Il est équipé en face avant du véhicule 1, en amont du groupe motopropulseur le long de la direction longitudinale X, et est destiné à la gestion thermique, particulièrement au refroidissement, de l'au moins un moteur d'un groupe motopropulseur.

De manière classique, le module de refroidissement 2 est monté sur un cadre porteur. Le cadre porteur comprend notamment au moins un élément d'une face avant technique du véhicule 1. On entend par « face avant technique » une structure située en avant du groupe motopropulseur et qui est configurée pour supporter différents organes du véhicule 1 et/ou intégrer différentes fonctions du véhicule 1, tel que davantage exposé ci-après. Le cadre porteur comprend par exemple une traverse inférieure, disposée le long d'une première direction 100 parallèle ou sensiblement parallèle à la direction transversale Y. Le cadre porteur comprend également un élément de cadre porteur 3, notamment supérieur, au moins en partie disposé au-dessus du module de refroidissement 2. De manière préférentielle, l'élément de cadre porteur 3 s'étend au moins en partie le long de la première direction 100.

Le véhicule 1 comprend également un agencement 10 selon l'invention, comprenant un ensemble de verrouillage 4 et l'élément de cadre porteur 3.

L'ensemble de verrouillage 4 comprend au moins une serrure 41 apte à verrouiller un capot du véhicule 1. La serrure 41 est montée sur l'élément de cadre porteur 3 et est apte à coopérer avec une gâche, non représentée, fixée au capot. Selon un exemple de réalisation préférentiel, illustré aux figures 1 à 4, la serrure 41 est disposée dans une portion centrale de l'élément de cadre porteur 3. On entend ici par « centrale » une position centrée ou sensiblement centrée le long de la direction transversale Y, et/ou de la première direction 100, au sein du véhicule 1 ou encore relativement à une longueur de l'élément de cadre porteur 3. Alternativement, la serrure 41 peut avoir une position excentrée.

L'ensemble de verrouillage 4 comprend également un dispositif d'actionnement 42 configuré pour actionner à distance la serrure 41 et un câble 43 reliant le dispositif d'actionnement 42 à la serrure 41. Le dispositif d'actionnement 42 est, par exemple, monté de sorte à être accessible depuis l'habitacle du véhicule 1. Notamment, le dispositif d'actionnement 42 est monté sur une partie d'une structure de caisse du véhicule 1. Le câble 43 s'étend alors depuis l'habitacle jusqu'à la face avant du véhicule 1, dans le volume situé sous le capot du véhicule 1. Une première extrémité 43a du câble 43 est reliée au dispositif d'actionnement 42 tandis qu'une deuxième extrémité 43b du câble 43, opposée, est reliée à la serrure 41. La première extrémité 43a comprend un premier embout de liaison, apte à assurer la connexion avec le dispositif d'actionnement 42, et la deuxième extrémité 43b comprend un deuxième embout de liaison, apte à assurer la connexion avec la serrure 41. De manière connue, le câble 43 est optionnellement entouré d'une gaine, notamment en matériau plastique, sur tout ou partie de sa longueur.

L'élément de cadre porteur 3 présente une forme allongée, c'est-à-dire qu'il présente une longueur strictement supérieure à sa largeur, notamment une longueur au moins trois fois supérieure à sa largeur. Tel qu'indiqué plus haut, au moins une partie de l'élément de cadre porteur 3 s'étend le long de la première direction 100. L'élément de cadre porteur 3 est apte à maintenir le module de refroidissement 2 du véhicule 1 et porte la serrure 41. Optionnellement, l'élément de cadre porteur 3 permet la fixation d'autres organes du véhicule 1 tels que des raccordements électriques et/ou des raccordements fluidiques.

L'élément de cadre porteur 3 est disposé de sorte à être interposé entre un premier espace 5a, comprenant le groupe motopropulseur, notamment un compartiment moteur du véhicule 1, et un deuxième espace 5b du véhicule 1, comprenant par exemple des éléments de la face avant tels qu'une grille d'entrée d'un flux d'air. En particulier, l'élément de cadre porteur 3 est interposé entre le premier espace 5a et le deuxième espace 5b lorsque l'on évolue le long d'une deuxième direction 200, orthogonale à la première direction 100 et parallèle, ou sensiblement parallèle, à la direction longitudinale X. Autrement dit, un observateur se déplaçant le long de la deuxième direction 200 depuis l'arrière du véhicule 1 vers l'avant observe successivement le premier espace 5a puis l'élément de cadre porteur 3 puis le deuxième espace 5b. De manière préférentielle, l'élément de cadre porteur 3 est au moins en partie verticalement aligné avec le module de refroidissement 2. L'élément de cadre porteur 3 et le module de refroidissement 2 sont ainsi traversés par au moins un axe s'étendant le long d'une troisième direction 300, orthogonale à la première direction 100 et à la deuxième direction 200, et ici parallèle à la direction verticale Z.

L'élément de cadre porteur 3 comprend une pluralité de parois 6 et un orifice 7 traversant dans lequel le câble 43 est disposé. On entend par « traversant » que l'orifice 7 s'étend dans l'épaisseur d'au moins l'une des parois 6 considérée et permet une communication, directe ou indirecte, entre le premier espace 5a et le deuxième espace 5b. L'orifice 7 permet ainsi le positionnement du câble 43 transversalement à la première direction 100, depuis le premier espace 5a vers le deuxième espace 5b en passant à travers l'élément de cadre porteur 3. La présence de l'orifice 7 dans l'élément de cadre porteur 3 permet de s'affranchir de la nécessité de réaliser une fixation au-dessus ou en dessous de l'élément de cadre porteur tel que cela est classiquement mis en oeuvre. Par voie de conséquence, les dimensions de l'élément de cadre porteur 3 le long de la direction verticale Z et/ou de la troisième direction 300 peuvent être réduites de sorte à présenter un encombrement vertical moins important.

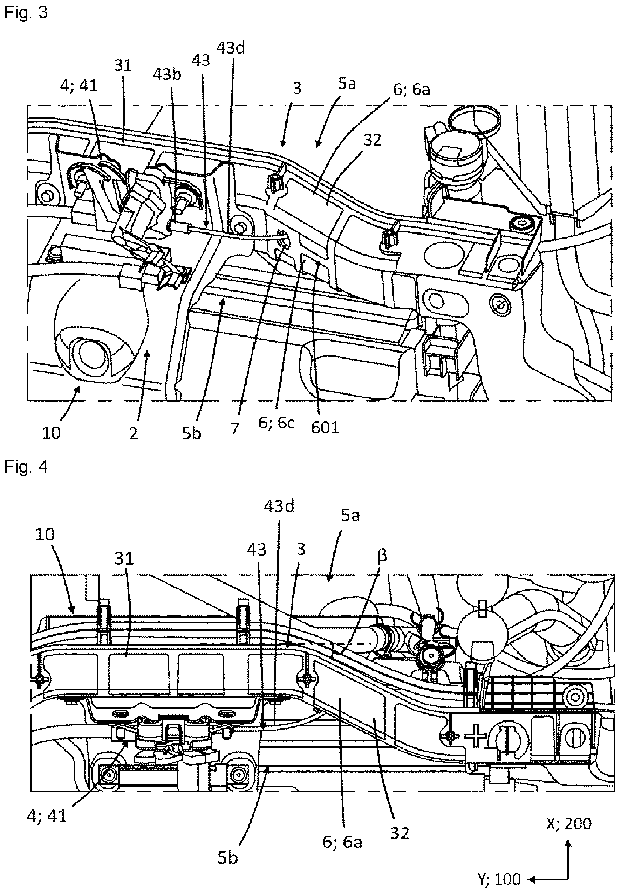

L'élément de cadre porteur 3 peut présenter des formes variables. L'élément de cadre porteur 3 comprend au moins un segment rectiligne 31 ou sensiblement rectiligne parallèle ou sensiblement parallèle à la première direction 100. Notamment, le segment rectiligne 31 porte la serrure 41. Selon un exemple de réalisation, l'élément de cadre porteur 3 est tel que le segment rectiligne 31 représente l'essentiel de sa longueur, c'est-à-dire au moins 50% de sa longueur, voire au moins 60%. De manière préférentielle, l'élément de cadre porteur 3 comprend également, tel qu'illustré à la figure 4, au moins un segment incliné 32 relativement au segment rectiligne 31 et à la première direction 100, le segment incliné 32 comprenant l'orifice 7. Par exemple, le segment incliné 32 présente une inclinaison β, comprise entre 15 et 40°, voire préférentiellement entre 20 et 30°, relativement au segment rectiligne 31 et à la première direction 100. Notamment, le segment incliné 32 s'étend vers le deuxième espace 5b, de sorte que le segment incliné 32 s'étend au moins en partie en avant du segment rectiligne 31 lorsqu'il est équipé dans le véhicule 1. Un tel principe permet d'avancer l'orifice 7 relativement au segment rectiligne 31, portant la serrure 41, de sorte que le câble 43 ne présente pas une courbure inadaptée, c'est à dire ici assurer qu'une ou plusieurs courbures observées au niveau de l'orifice 7 présentent un angle strictement supérieur à 90°.

L'élément de cadre porteur 3 comprend notamment une structure métallique surmoulée d'au moins un matériau plastique. Par exemple, la structure métallique est réalisée en acier. De manière non limitative, le matériau plastique est du polypropylène, notamment du PP-GF30. L'élément de cadre porteur 3 présente ainsi une structure résistante aux efforts et vibrations ainsi qu'à des températures élevées, résultant du fonctionnement du groupe motopropulseur, par exemples des températures supérieures à 90 °C.

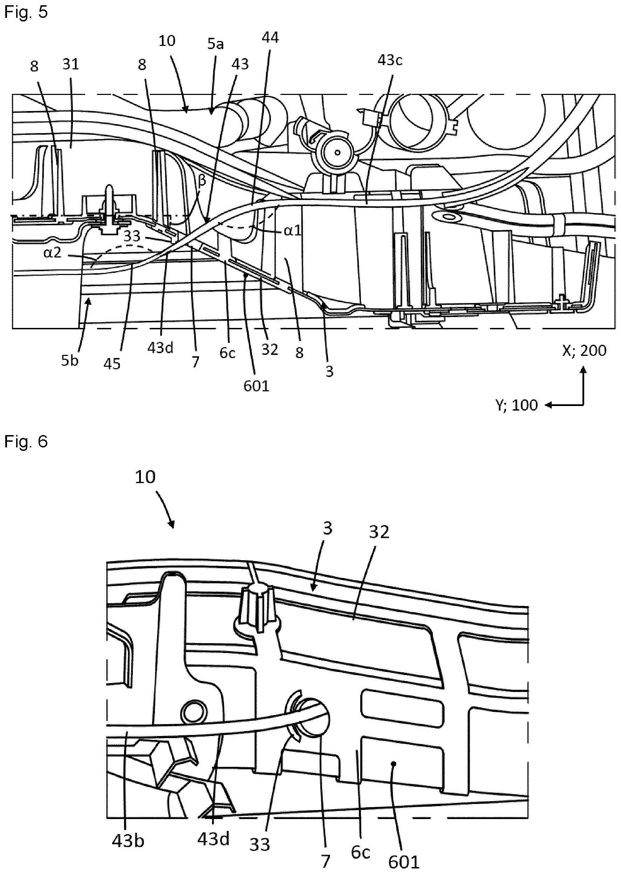

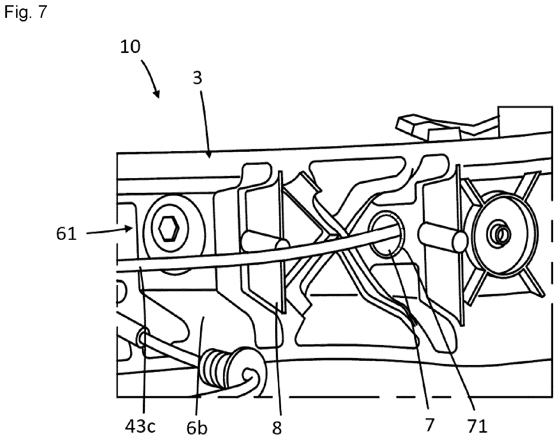

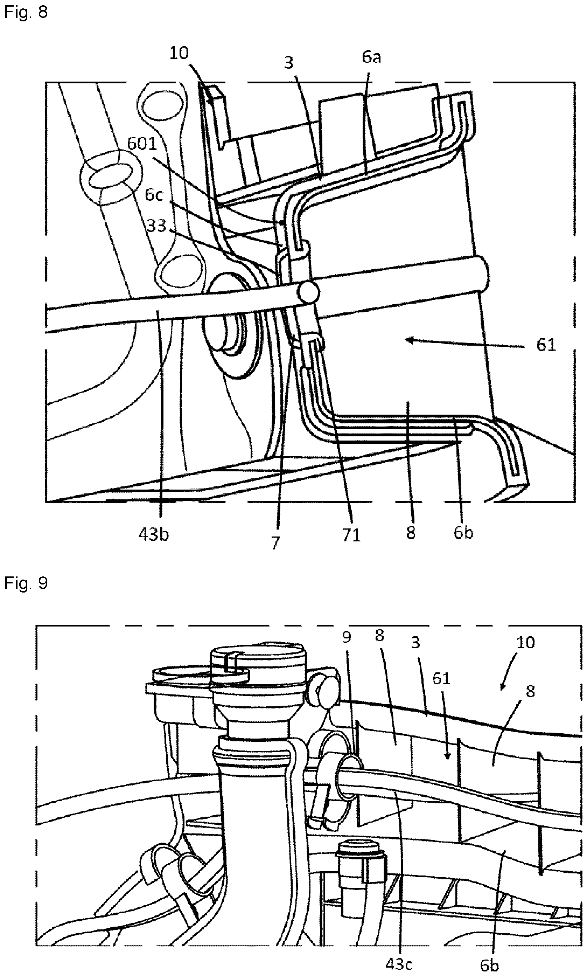

Les figures 2 à 9 illustrent un exemple de réalisation, optionnel mais préférentiel, de l'élément de cadre porteur 3 dans lequel la pluralité de parois 6 de l'élément de cadre porteur 3 comprend une structure en « U » ou sensiblement en « U ». Notamment une telle structure en « U » est observée dans un profil de l'élément de cadre porteur 3 compris dans un plan orthogonal à la première direction 100. La pluralité de parois 6 comprend une première paroi 6a et une deuxième paroi 6b, opposées et formant les branches du « U », et une paroi intermédiaire 6c reliant la première paroi 6a et la deuxième paroi 6b entre elles. Notamment, selon un exemple de réalisation non limitatif, la paroi intermédiaire 6c s'étend verticalement ou sensiblement verticalement. La pluralité de parois 6 délimite ainsi un volume intermédiaire 61, disposé entre le premier espace 5a et le deuxième espace 5b, ouvert sur au moins un côté. Par exemple, le côté ouvert est tourné vers le premier espace 5a, la paroi intermédiaire 6c étant disposée en avant de du volume intermédiaire 61, de sorte à assurer une protection au moins partielle d'au moins un organe disposé dans le volume intermédiaire 61, par exemple le câble 43 ou un raccordement tel qu'exposé plus haut, en cas de choc frontal. Le volume intermédiaire 61 est ainsi apte à recevoir au moins une partie du câble 43. De manière préférentielle, l'orifice 7 est disposé dans la paroi intermédiaire 6c.

L'orifice 7 a fonction de fixation du câble 43. Il participe à maintenir le câble 43 relativement à l'élément de cadre porteur 3. L'orifice 7 peut présenter des formes variables, par exemple polygonale, circulaire ou oblongue. De manière préférentielle, l'orifice 7 présente une forme arrondie, notamment circulaire ou oblongue. L'orifice 7 présente ainsi une forme, dans l'épaisseur de l'élément de cadre porteur 3, cylindrique ou tronconique. L'orifice 7 est dimensionné de sorte à permettre le passage du câble 43, particulièrement le passage d'au moins l'une des extrémités du câble 43 et de l'embout équipant celle-ci. Préférentiellement, l'orifice 7 est dimensionné de sorte à permettre le passage de la deuxième extrémité 43b et du deuxième embout du câble 43.

L'orifice 7 est, par exemple, réalisé par perforation ou découpe, réalisée transversalement à la paroi le comprenant. Par exemple, l'orifice 7 est réalisé par une perforation ou découpe orthogonale à la paroi le comprenant.

L'orifice 7 est délimité par un ou plusieurs bords. Optionnellement mais préférentiellement, l'orifice 7 est délimité par au moins un bord arrondi 71, aussi qualifié de congé, de sorte à limiter l'usure d'une portion du câble 43 disposée dans l'orifice 7.

Une première portion 43c du câble 43 s'étend depuis le dispositif d'actionnement 42 jusqu'à l'orifice 7. La première portion 43c du câble 43 comprend la première extrémité 43a du câble 43. Notamment, elle est au moins en partie disposée au niveau du premier espace 5a et/ou du volume intermédiaire 61. Une deuxième portion 43d du câble 43, distincte de la première portion 43c, s'étend depuis l'orifice 7 jusqu'à la serrure 41. La deuxième portion 43d du câble 43 s'étend dans le deuxième espace 5b.

Notamment, au moins une portion du câble 43 est disposée au contact du bord de l'orifice 7 ou d'au moins l'un des bords de l'orifice 7. Notamment la deuxième portion 43d du câble 43 est disposée en appui dudit bord. Par exemple, ledit bord est le bord arrondi 71.

Optionnellement, l'élément de cadre porteur 3 comprend un organe d'appui 33, s'étendant en saillie d'une face de l'élément de cadre porteur 3 et est apte à former butée du câble 43. En l'espèce, l'organe d'appui 33 est disposé au niveau de la paroi intermédiaire 6c, notamment au niveau d'une première face 601 de la paroi intermédiaire 6c, tournée vers le deuxième espace 5b. L'organe d'appui 33 est agencé au niveau de l'au moins un bord de l'orifice 7, par exemple à proximité de celui-ci. On entend par « à proximité » une distance inférieure ou égale à 3 cm, voire à 2 cm ou encore 1 cm de l'au moins un bord de l'orifice 7. L'organe d'appui 33 et la paroi intermédiaire 6c sont venus de matière. L'organe d'appui 33 entoure tout ou partie de l'orifice 7. Par exemple, pour un orifice 7 circulaire tel qu'illustré, l'organe d'appui 33 présente une forme d'arc de cercle entourant une partie de l'orifice 7. L'organe d'appui 33 présente une hauteur supérieure ou égale à 2 mm, notamment supérieure ou égale à 2,5 mm voire à 2,6 mm. La hauteur est ici mesurée entre la première face 601 et un sommet de l'organe d'appui 33 le long d'une direction orthogonale à la première face 601. Optionnellement mais préférentiellement, le sommet de l'organe d'appui 33 est arrondi. L'organe d'appui 33 permet ainsi d'augmenter l'angle de courbure du câble 43 et de limiter les risques d'usure du câble 43 au niveau des zones de contact avec l'au moins un bord de l'orifice 7.

Lorsque le câble 43 est disposé au sein de l'agencement 10, il comprend une pluralité de courbures au niveau de l'orifice 7, notamment une première courbure 44 et une deuxième courbure 45. La première courbure 44 est formée par la première portion 43c du câble 43, c'est-à-dire par la portion du câble 43 disposée dans le premier espace 5a et/ou dans le volume intermédiaire 61. La deuxième courbure 45 est formée par la deuxième portion 43d du câble 43, c'est-à-dire par la portion du câble 43 disposée dans le deuxième espace 5b. La première courbure 44 et la deuxième courbure 45 présentent respectivement un angle de courbure α1, α2 supérieur ou égal à 80°, voire à 100°. Par exemple, la première courbure 44 et la deuxième courbure 45 présentent respectivement un angle de courbure α1, α2 supérieur à 130°, voire à 145°. Par exemple, lesdits angles de courbures représentent chacun l'angle mesuré à l'intersection de deux demi-droites suivant le tracé de la portion de câble considérée.

Selon un exemple de réalisation, optionnelle, l'élément de cadre porteur 3 comprend avantageusement au moins un organe de renfort 8. Par exemple, l'organe de renfort 8 est une paroi de renfort disposée dans le volume intermédiaire 61. Additionnellement ou alternativement, l'organe de renfort 8 s'étend au moins entre deux parois 6 opposées de l'élément de cadre porteur 3, par exemple entre la première paroi 6a et la deuxième paroi 6b. Dans l'exemple illustré, l'organe de renfort 8 s'étend le long de la troisième direction 300, parallèlement à la direction verticale. Optionnellement, l'élément de cadre porteur 3 comprend une pluralité d'organes de renfort 8 répartis sur tout ou partie de la longueur de l'élément de cadre porteur 3, c'est-à-dire le long de la première direction 100 notamment. Optionnellement, l'élément de cadre porteur 3 et l'au moins un organe de renfort 8 sont venus de matière.

De manière optionnelle, l'agencement 10 selon l'invention comprend, en outre, au moins un organe de fixation 9 du câble 43, tel qu'un clip ou une pince, apte à maintenir le câble 43 solidaire de l'élément de cadre porteur 3. De manière préférentielle, les organes de fixation 9 sont au moins en partie disposés dans le volume intermédiaire 61 et/ou dans le premier volume. Chaque organe de fixation 9 est monté sur l'une des parois 6 de la pluralité de parois 6 ou est monté sur l'au moins un organe de renfort 8, à savoir ici la paroi de renfort. Notamment, les organes de fixation sont configurés pour coopérer avec la première portion 43c du câble 43.

L'invention concerne également un procédé de montage de l'agencement 10 selon l'invention. Le procédé de montage comprend, dans un premier temps, le positionnement du dispositif d'actionnement 42 dans le véhicule 1, tel que décrit plus haut. Ensuite, la première extrémité 43a du câble 43 est fixée au dispositif d'actionnement 42, notamment par l'intermédiaire du premier embout. Un technicien procède ensuite au tirage du câble 43 en passant successivement dans le premier espace 5a, dans l'orifice 7 de l'élément de cadre porteur 3 puis dans le deuxième espace 5b. Le câble 43 passe ainsi dans le premier espace 5a, puis à travers l'élément de cadre porteur 3, et par extension à travers le volume intermédiaire 61, en passant transversalement à la première direction 100, puis dans le deuxième espace 5b. Au niveau du passage du câble 43 à travers l'orifice 7, le câble 43, tel qu'indiqué plus haut, présente une ou plusieurs courbure(s) d'angle supérieur ou égal à 80° voire à 100°, par exemple même supérieur ou égal à 130 ou 145°. Enfin, le procédé comprend la fixation de la deuxième extrémité 43b du câble 43 à la serrure 41, notamment par l'intermédiaire du deuxième embout.

Lorsque l'agencement 10 comprend un ou plusieurs organes de fixation 9, le procédé comprend également une étape de fixation du câble 43 relativement à l'élément de cadre porteur 3 par l'intermédiaire desdits organes de fixation 9. Une telle étape peut être réalisée préalablement, simultanément ou ultérieurement à l'étape de fixation de la deuxième extrémité 43b.

La présente invention propose ainsi un agencement comprenant un ensemble de verrouillage d'un capot et un élément de cadre porteur permettant la fixation d'un câble de l'ensemble de verrouillage selon une alternative peu coûteuse, peu encombrante et permettant un montage simple dans le véhicule.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Agencement (10) pour véhicule (1) automobile comprenant un ensemble de verrouillage (4) comportant une serrure (41) apte à verrouiller un capot du véhicule (1), un dispositif d'actionnement (42) configuré pour actionner à distance la serrure (41) et un câble (43) reliant le dispositif d'actionnement (42) à la serrure (41), l'agencement (10) comprenant, en outre, un élément de cadre porteur (3) apte à maintenir un échangeur de chaleur du véhicule (1) et maintenant la serrure (41), l'élément de cadre porteur (3) s'étendant au moins en partie le long d'une première direction (100) et étant disposé entre un premier espace (5a), configuré pour comprendre un groupe motopropulseur du véhicule (1), et un deuxième espace (5b) du véhicule (1), l'élément de cadre porteur (3) comprenant une pluralité de parois (6) et un orifice (7), disposé dans l'une des parois (6), traversant depuis le premier espace (5a) vers le deuxième espace (5b) et dans lequel le câble (43) est disposé transversalement à la première direction (100).

2. Agencement (10) selon la revendication précédente, dans lequel la pluralité de parois (6) de l'élément de cadre porteur (3) comprend une structure en « U » ou sensiblement en « U » comprenant une première paroi (6a) et une deuxième paroi (6b), opposées, et une paroi intermédiaire (6c) les reliant entre elles, l'orifice (7) étant disposé dans la paroi intermédiaire (6c).

3. Agencement (10) selon l'une des revendications précédentes, dans lequel :
- au moins une portion du câble (43) disposée dans le deuxième espace (5b) s'étend en appui d'au moins un bord de l'orifice (7) ; et/ou
- au niveau du passage du câble (43) à travers l'orifice (7), le câble (43) comprend une ou plusieurs courbure(s) chacune d'angle supérieur ou égal à 80°, voire à 100° ou encore supérieur à 130°, voire à 145°.

4. Agencement (10) selon l'une des revendications précédentes, dans lequel l'orifice (7) est délimité par au moins un bord arrondi (71) ou congé.

5. Agencement (10) selon l'une des revendications précédentes, dans lequel l'élément de cadre porteur (3) comprend un organe d'appui (33), s'étendant en saillie d'une face de l'élément de cadre porteur (3), notamment d'une face tournée vers le deuxième espace (5b), l'organe d'appui (33) étant apte à former butée du câble (43).

6. Agencement (10) selon l'une des revendications précédentes, dans lequel l'élément de cadre porteur (3) comprend un organe de renfort (8).

7. Agencement (10) selon l'une des revendications précédentes, dans lequel l'élément de cadre porteur (3) comprend un segment rectiligne (31) ou sensiblement rectiligne, portant la serrure (41), et au moins un segment incliné (32) présentant une inclinaison β, comprise entre 15 et 40°, voire entre 20° et 30°, relativement au segment rectiligne (31) et à la première direction (100), l'orifice (7) étant compris dans le segment incliné (32).

8. Agencement (10) selon l'une des revendications précédentes, comprenant, en outre, au moins un organe de fixation (9) du câble (43) apte à maintenir le câble (43) solidaire de l'élément de cadre porteur (3).

9. Véhicule (1) comprenant un groupe motopropulseur et un module de refroidissement (2), le véhicule comprenant, en outre, un agencement (10) selon l'une des revendications précédentes, l'élément de cadre porteur (3) portant le module de refroidissement (2).

10. Procédé de montage d'un agencement (10) selon l'une des revendications 1 à 8 dans un véhicule (1), comprenant :
- le positionnement du dispositif d'actionnement (42) dans le véhicule (1) ;
- la fixation d'une première extrémité (43a) du câble (43) au dispositif d'actionnement (42) ; puis
- le tirage du câble (43) en passant successivement dans le premier espace (5a), dans l'orifice (7) de l'élément de cadre porteur (3) puis dans le deuxième espace (5b) ;
- la fixation d'une deuxième extrémité (43b) du câble (43), opposée à la première extrémité (43a), à la serrure (41).
